# EUROPEAN PATENT SPECIFICATION

(11) **EP 1 472 039 B1**
(45) Date of publication and mention of the grant of the patent: **16.04.2008**
(21) Application number: 01927488.5
(22) Date of filing: 02.05.2001
(51) Int. Cl.: B23K 9/18, B23K 9/16

(54) **DEVICE FOR ISOLATING A SURFACE FOR WELDING**
VORRICHTUNG ZUR ISOLIERUNG EINES OBERFLÄCHENBEREICHS EINES WERKSTÜCKS ZUM SCHWEISSEN
DISPOSITIF D'ISOLATION D'UNE SURFACE EN VUE D'UN SOUDAGE

(30) Priority: 02.05.2000 AU PQ723700; 05.12.2000 AU PR186600
(43) Date of publication of application: 03.11.2004
(73) Proprietor: Neptune Marine Services Limited, Subiaco, Western Australia (AU)
(72) Inventor: Langley, Clive Graham, Attadale, W.A. 6156 (AU)
(74) Representative: Lyons, Andrew John
(86) International application number: PCT/AU2001/000495
(87) International publication number: WO 2001/083147

(56) References cited:
- GB-A- 2 172 533
- US-A- 4 654 500
- US-A- 4 956 537
- US-A- 5 750 954
- US-A- 5 852 271
- PATENT ABSTRACTS OF JAPAN vol. 006, no. 142 (M-146), 31 July 1982 (1982-07-31) & JP 57 064476 A (MITSUBISHI HEAVY IND LTD), 19 April 1982 (1982-04-19)
- PATENT ABSTRACTS OF JAPAN vol. 012, no. 434 (M-764), 16 November 1988 (1988-11-16) & JP 63 168278 A (TOSHIBA CORP), 12 July 1988 (1988-07-12)
- DATABASE WPI Week 199248, Derwent Publications Ltd., London, GB; Class P55, AN 1992-396102, XP002999485 & NL 9 100 586 A (KEMA NV) 02 November 1992

## Description

### FIELD OF THE INVENTION

The present invention relates to a device for isolating a surface for welding, particularly for example, in an underwater location or in a high fire risk area.

### BACKGROUND OF THE INVENTION

US 4654500 describes a portable welding apparatus for use in underwater arc welding comprising a housing through whose wall extends a welding gun, and discloses in combination the features of the preamble of claim 1. The housing has an aperture for fitment over an item to be welding to a structure and the housing has a gas inlet for evacuation of water from the housing, in use.

The mechanical properties of a welded surface formed under "dry" welding conditions is frequently recorded to be greater than or equal to 23% elongation of tensile allweld.

This stands in marked contrast to the mechanical properties of a welded surface which is formed under "wet" welding conditions. The elongation of tensile allweld for an underwater welded surface is typically about 7-8% due to rapid cooling of the welded surface through heat dispersion to the surrounding water and a high concentration of hydrogen absorbed into the weld. The underwater welded surface is thus more brittle and weaker than a weld formed on a surface made of the same material under "dry" conditions.

It is known to provide large hyperbaric chambers which are constructed around, so as to fully enclose, an underwater surface which requires welding. Such hyperbaric chambers are large enough to hold a diver and the diver's welding apparatus. In use, the hyperbaric chamber is drained of water and the diver welds the surface under "dry" conditions. The procedure is lengthy, and costly. The hyperbaric chambers are large and cumbersome to operate, and they are frequently oversized for the surface area which requires welding. Not surprisingly, the hyperbaric chambers are very expensive- For a very small welded area, the cost can run into many millions of dollars.

The present invention seeks to overcome at least some of the aforementioned disadvantages.

### SUMMARY OF THE INVENTION

In accordance with a first aspect of the invention there is provided a device for isolating a surface for welding, comprising a housing provided with:
a sealed inlet for receiving a welding electrode;
a fluid inlet for the passage of heated gas into the housing, and a fluid outlet for the passage of heated gas and/or liquid out of the housing;
wherein the housing is arranged in use to be mounted on the surface; and
a sealing means disposed between the housing and the surface to provide a seal between the housing and the surface, whereby, in use, an ingress of heated gas through the fluid inlet in the housing facilitates an egress of gas and/or liquid contained in a space defined by the housing and the surface through the fluid outlet in the housing, thereby providing an in situ substantially dry, gaseous environment for welding the surface characterized in that a flexible member is mounted to the housing, the flexible member comprising a flexible tube portion having a first end mounted to an aperture in the housing, and a second, sealed end, the second sealed end containing a seal arranged to be pierced by a welding electrode in water tight manner.

### DETAILED DESCRIPTION OF AN EMBODIMENT OF THE INVENTION

The present invention will now be described, by way of example only, with reference to the accompanying drawings, in which :-
Figure 1 is a side elevatory view of a device for isolating an underwater surface from surrounding water in accordance with the present invention;
Figure 2 is a plan view of the device shown in Figure 1;
and Figure 3 is a diagrammatic sectional view of a gas heating means for use with the device shown in Figures 1, and 2.

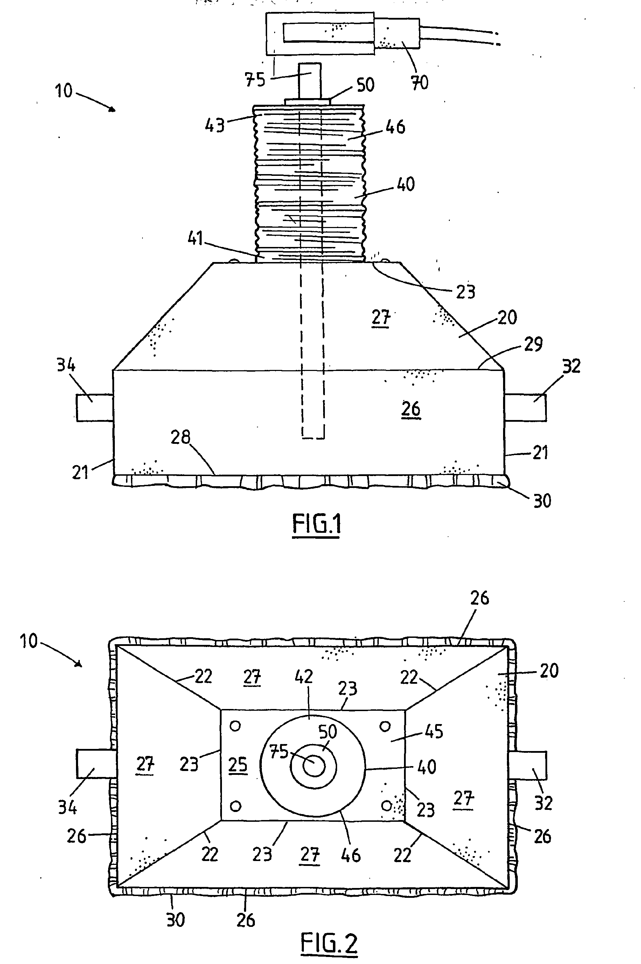

In Figures 1 and 2 of the accompanying drawings there is shown a device 10 for isolating an underwater surface from surrounding water for welding. The device 10 includes a housing 20, a first seal 30, a flexible member 40, and a second seal 50.

The housing 20 is comprised of a plurality of upright side walls 26, a plurality of corresponding inwardly inclined upper walls 27, each upper wall 27 depending from an uppermost edge 29 of each side wall 26, and a substantially horizontal uppermost wall 25 laterally extending between uppermost edges 23 of the upper walls 27. Each side wall 26 is interconnected to an adjacent side wall 26 along the length of its side edge 21. Similarly, each upper wall 27 is interconnected to an adjacent upper wall 27 along the length of its side edge 22. The uppermost wall 25 is provided with an aperture 42 disposed in a substantially central portion of the uppermost wall 25. Thus, the housing 20 forms an open ended box-like structure.

Preferably, the housing 20 is formed from a transparent rigid plastic material, for example perspex, or constructed from stainless steel with polycarbonate viewing windows, or any other material having characteristics for welding at depth. It is envisaged that the length and/or breadth of the housing will vary from about 250-300mm to allow a weld runout length (ROL) of approximately 100-175mm, however it is within the scope of the invention for the housing to have an increased size in proportion with the area of the surface to be welded.

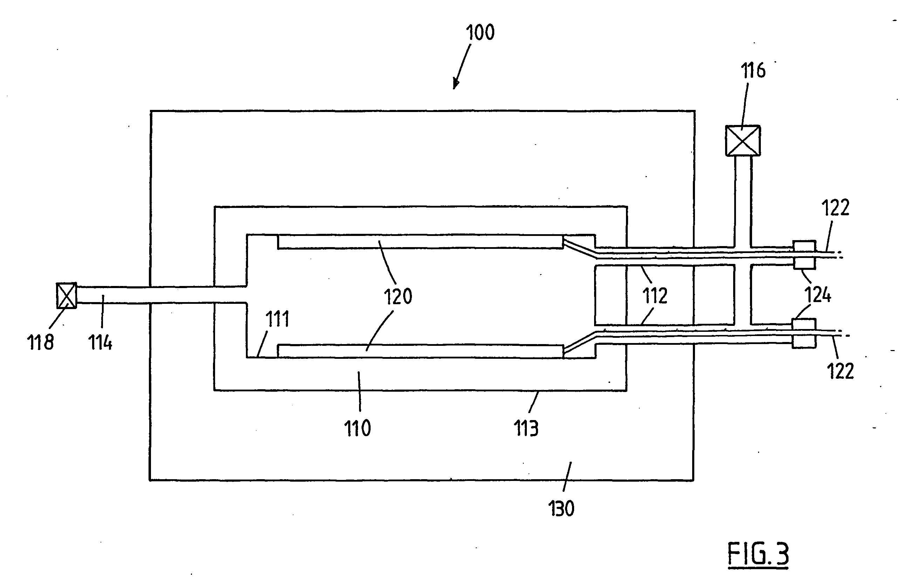

The housing 20 is provided with a fluid inlet 32 and a fluid outlet 34 disposed in opposing side walls 26. The fluid inlet 32 is adapted to be coupled with, and in fluid communication with, a gas heating means 100 as shown in Figure 3. The fluid inlet 32 extends into the housing 20, wherein a portion of the fluid inlet 32 disposed inside the housing 20 is perforated, forked, or branched to allow consistent and directional flow of gas into the housing 20. It is also envisaged that there may be a plurality of fluid inlets 32 disposed in any wall of the housing 20.

The first seal 30 depends from, and along the whole extent of, a lowermost edge 28 of the side walls 26. Preferably, the first seal 30 is made from a resilient plastics material, for example, neoprene or silicone, such that the seal formed between the housing 20 and the surface is water-tight. It is envisaged that the lowermost edge 28 of the side walls 26 will be provided with a contour to correspond with an exterior contour of the surface to be welded. For example, the contour of the lowermost edge 28 of the side walls 26 may be curved to correspond with the exterior contour of a welded pipe, or the contour of the lowermost edge 28 of the side walls 26 may be stepped to correspond with the exterior contour of a stepped surface.

The flexible member 40 is comprised of a flexible tube portion 46 having a first end 41 and a second end 43. The first end 41 is provided with a flange portion 45. The flange portion 45 is arranged, in use, to be mounted contiguously to the uppermost wall 25 of the housing 20. In this way, the tube portion 46 is substantially longitudinally aligned with the aperture 42 in the uppermost wall 25.

The second end 43 of the tube portion 42 is sealed. The second seal 50 is disposed in the second end 43 of the tube portion 42. The second seal 50 is arranged in use to receive a welding electrode 75 as shown in Figure 1. Preferably the second seal 50 is made from a resilient plastics material, for example, neoprene or silicone rubber, such that the seal formed between the electrode 75 and the second seal 50 is water-tight.

Referring to Figure 3, the gas heating means 100 includes a hollow heating vessel 110 having at least one gas inlet 112, a gas outlet 114, and at least one heating element 120. Preferably, the or each heating element 120 fixedly mounted on an inner surface 111 of the hollow heating vessel 11.0. Alternatively, the or each heating element 120 is disposed substantially orthogonally in a series, to the direction of gas flow into the heating vessel 110 such that heat transfer to inflowing gas is maximised. It is envisaged that the or each heating element 120 will heat an interior of the hollow heating vessel up to and around 700°C. It will be understood that the number and size of heating elements 120 disposed inside the heating vessel 110 will increase in proportion to the size of the heating vessel 110.

The hollow heating vessel 110 is formed from a rigid material which can withstand the degree of water pressure occurring at a depth where underwater welding is undertaken, and, preferably, which is also an efficient heat conductor. Preferably, the hollow heating vessel 110 is formed from a metallic material such as stainless steel, carbon steel, aluminium, titanium, and other suitable metallic alloys.

The hollow heating vessel 110 is provided with an insulation layer 130, disposed contiguously on an outer surface 113 of the hollow heating vessel 110, to prevent heat dispersion from the hollow heating vessel 110 to the surrounding water. Preferably, the insulation layer 130 is formed from a synthetic plastics material, such as rubber, polyethylene, polyurethane, or any other suitable insulating material.

The or each heating element 120 is provided with a conduit 122 for the supply of power to the or each respective heating element 120 from an outside power source (not shown). It is envisaged that a portion of the conduit 122 is disposed in a bore of the gas inlet 112, the gas inlet 112 being provided with a water-tight seal 124 where the conduit 122 enters the gas inlet 112.

The gas inlet 112 is provided with a first valve 116, the first valve 116 being adapted to be coupled to a welding gas source (not shown), such as a gas bottle, so as to receive gas from the welding gas source. It is envisaged that the gas will be supplied to the gas inlet 112 and, subsequently, the hollow heating vessel 110 at a pressure corresponding to a gas pressure regulated by a gas pressure regulator located at the welding gas source, typically at a flow rate of 30-40 litres/minute.

Typically, the temperature of the welding gas supplied to the gas inlet 112 and subsequently to the hollow heating vessel 110 is 0 - 25°C. The temperature of the welding gas is heated to 100 - 300 °C, preferably 130 - 150 °C during its residence period in the hollow heating vessel 110.

The gas outlet 114 is provided with a second valve 118, the second valve 118 being adapted to be coupled to the fluid inlet 32 of the housing 20, so as to supply heated gas to the housing 20.

In use, the housing 20 is mounted on the underwater surface which is to be welded. The first seal 30 provides a water-tight seal at the interface between the underwater surface and the lowermost edge 28 of the housing 20.

At this stage, the space defined by the surface, the housing 20 and the flexible member 40 contains water. Water is expelled from the space through the fluid outlet 34 by applying a positive pressure of gas, for example pressurised air, diver's breathing air, nitrogen, argon, carbon dioxide, Ar/He mixture, and other suitable inert gases, through the fluid inlet 32 to effect a "dry area". It is envisaged that throughout the duration of welding, the positive pressure of gas will be maintained to ventilate the dry area, enclosed by the housing 20 of smoke and other fumes generated during the welding process.

If water is merely displaced from the housing 20 by gas at ambient temperature, the welding environment tends to remain humid because of residual moisture on the welding surface. Thus, optimum conditions for conducting successful dry welds with desirable elongation of tensile allweld are not readily achieved.

The inventor has found that optimum conditions for conducting successful dry welds with desirable elongation of tensile allweld can be achieved by heating the aforementioned gas to a temperature of between 100 - 300 °C, preferably 130 - 150 °C with the gas heating means 100 prior to the gas entering the housing 20 of the device 10, as described above. The heated gas assists in the evaporation of residual moisture on the welding surface. In this way, the *in situ* environment in the vicinity of the underwater surface can be kept substantially dry and free of water, and the welding process can proceed under substantially similar conditions conventionally used in normal dry welding. The mechanical properties of a welded surface formed underwater using the present invention has been recorded to be 23 - 26 % elongation of tensile allweld.

The welding electrode 75 is introduced into the housing 20 by piercing the second seal 50 with the welding electrode 75, and then feeding the welding electrode 75 through the flexible tube portion 46 and the aperture 42 in the uppermost wall 25 of the housing 20. The welding electrode 75 is held in a desired position and manipulated with an electrode holder. The flexible nature of the flexible tube portion 46 allows an operator to move and manipulate the welding electrode 75 within the housing 20. The transparent character of the housing 20 allows the operator to view the welding process as it proceeds.

When the operator has completed a weld run, the housing 20 can be removed from the underwater surface and repositioned to allow the next weld run to be completed. After the weld run is fully completed the housing 20 can be repositioned on the next weld joint.

It is envisaged that the device 10 will be suitable for a wide variety of welding processes and applications required for underwater surfaces including manual metal-arc welding, gas-metal arc welding, and flux core welding performed on off-shore structures, oil rigs and platforms, hull section repair, pipeline etc.

The purpose of the present invention is to provide an efficient and cost-effective means by which wet underwater surfaces may be welded underwater under "dry" conditions.

It is also envisaged that the present invention will be particularly suitable for use in a dry environment where it is desirable to isolate a welding area in a confined area to prevent dispersion of sparks in a toxic/explosive/flammable environment. The present invention is also suitable for use in a hyperbaric environment where it is desirable to create a good welding environment which is not hydrogen rich and has low humidity.

## Claims

1. A device (10) for isolating a surface for welding, comprising a housing (20) provided with:
a sealed inlet for receiving a welding electrode;
a fluid inlet (32) for the passage of heated gas into the housing, and a fluid outlet (34) for the passage of heated gas and/or liquid out of the housing;
wherein the housing is arranged in use to be mounted on said surface; and
a sealing means (30) disposed between the housing (20) and the surface to provide a seal between the housing (20) and the surface, whereby, in use, an ingress of heated gas through the fluid inlet (32) in the housing facilitates an egress of gas and/or liquid contained in a space defined by the housing (20) and the surface through the fluid outlet (34) in the housing (20), thereby providing an in situ substantially dry, gaseous environment for welding the surface **characterized in that** a flexible member (40) is mounted to the housing (20), the flexible member (40) comprising a flexible tube portion (46) having a first end (41) mounted to an aperture (42) in the housing (20), and a second, sealed end (43), the second sealed end (43) containing a seal (50) arranged to be pierced by a welding electrode (75) in water tight manner.

2. The device (10) according to claim 1, **characterized in that** the device (10) further comprises a heating means (100) arranged to provide heated gas to the fluid inlet (32) of the housing (20).

3. The device (10) according to claim 2, **characterized in that** the heating means (100) comprises a vessel (110) having at least one gas inlet (112), a gas outlet (114), and at least one heating element (120).

4. The device (10) according to claim 3, **characterized in that** the heating element (120) is mounted on an inner surface (111) of the vessel (110).

5. The device (10) according to claim 3, **characterized in that** the or each heating element (120) is disposed substantially orthogonally to the direction of gas flow into the heating vessel (110).

6. The device (10) according to any one of claims 3 to 5, **characterized in that** the or each heating element (120) heats an interior of the vessel (110) up to and around 700°C.

7. The device (10) according to any of claims 3 to 6, **characterized in that** the vessel (110) is formed from a rigid material which can withstand a degree of water pressure occurring at a depth where underwater welding is undertaken.

8. The device (10) according to claim 7, **characterized in that** the rigid material is an efficient heat conductor.

9. The device (10) according to claim 7 or claim 8, **characterized in that** the vessel (110) is formed from a metallic material selected from a group comprising stainless steel, carbon steel, aluminium, titanium, metallic alloys.

10. The device (10) according to any one of claims 3 to 9, **characterized in that** the vessel (110) is provided with an insulation layer (130) disposed contiguously on an outer surface (113) of the vessel (110).

11. The device (10) according to claim 10, **characterized in that** the insulation layer (130) is formed from a synthetic plastics material.

12. The device (10) according to any one of claims 3 to 11, **characterized in that** the or each heating element (120) is provided with a conduit (122) for the supply of power to the or each respective heating element (120) from a power source.

13. The device (10) according to any one of claims 3 to 12, **characterized in that** the gas inlet (112) is provided with a first valve (116), the first valve (116) being arranged to be coupled to a welding gas source, so as to receive gas into the vessel (110).

14. The device (10) according to any one of claims 3 to 13, **characterized in that** the gas outlet (114) is provided with a second valve (118), the second valve (118) being arranged to be coupled to the fluid inlet (32) of the housing (20), so as to supply heated gas to the housing (20).

15. The device (10) according to any one of claims 3 to 14, **characterized in that** the or each heating element (120) is arranged to heat gas received in the vessel (110) to 100-300°C during a residence period of the gas in the vessel (110).

16. The device (10) according to claim 15, **characterized in that** the gas is heated to 130-150°C during the residence period in the vessel (110).

17. The device (10) according to any one of claims 1 to 16, **characterized in that** the fluid inlet (32) and the fluid outlet (34) are disposed in opposing walls (26) of the housing (20).

18. The device (10) according to any one of claims 1 to 17, **characterized in that** a portion of the fluid inlet (32) extends into the housing (20).

19. The device (10) according to claim 18, **characterized in that** the portion is perforated, forked or branched.

20. The device (10) according to any one of claims 1 to 19, **characterized in that** there is more than one fluid inlet (32) disposed in the housing (20).

21. A device (10) according to any one of claims 2 to claim 20, **characterized in that** the fluid inlet (32) is arranged to be coupled with, and in fluid communication with the heating means (100).

22. The device (10), according to any one of claims 1 to 21, **characterized in that** the sealing means (30) depends from, and along the whole extent of, a lowermost edge of the housing (20).

23. The device (10) according to any one of claims 1 to 22, **characterized in that** the sealing means (30) is formed from a resilient plastics material.

24. The device (10) according to any one of the claims 1 to 23, **characterized in that** the sealing means (30) is formed from a material wherein the seal formed between the housing and the surface is water-tight.

25. The device (10) according to any one of claims 1 to 24, **characterized in that** the lowermost edge of the housing (20) is provided with a contour to substantially correspond with an exterior contour of the surface.

26. The device (10) according to any one of claims 1 to 25, **characterized in that** the housing (20) is formed from a transparent rigid plastics material.

27. The device (10) according to any one of claims 1 to 26, **characterized in that** the housing is formed from stainless steel with polycarbonate viewing windows.

28. The device (10) according to any one of claims 1 to 27, **characterized in that** the flexible member (40) is comprised of a flexible tube portion (46) mounted contiguously to an uppermost wall (23) of the housing (20), wherein the tube portion (46) is substantially longitudinally aligned with the aperture (42) in the uppermost wall (23).

## Patentansprüche

1. Vorrichtung (10) zur Isolierung eines Oberflächenbereichs zum Schweißen, die ein Gehäuse (20) umfasst, das mit Folgendem versehen ist:
Einem abgedichteten Einlass zum Aufnehmen einer Schweißelektrode;
einem Fluideinlass (32) zum Durchgang von erhitztem Gas in das Gehäuse und einem Fluidauslass (34) zum Durchgang von Gas und/oder Fluid aus dem Gehäuse; und
wobei das Gehäuse im Gebrauch eingerichtet ist, auf den Oberflächenbereich montiert zu werden; und
einem Dichtmittel (30), das zwischen dem Gehäuse (20) und dem Oberflächenbereich angeordnet ist, wodurch, im Gebrauch ein Eindringen von erhitztem Gas durch den Fluideinlass (32) in das Gehäuse, ein Austreten von Gas und/oder Flüssigkeit, die im Raum enthalten ist, der vom Gehäuse (20) und den Oberflächenbereich definiert ist, durch den Fluidauslass (34) im Gehäuse (20) erleichtert wird, wodurch an Ort und Stelle eine im Wesentlichen trockene, gasförmige Umgebung zum Schweißen des Oberflächenbereichs bereitgestellt wird, **dadurch gekennzeichnet, dass** ein flexibles Bauelement (40) auf das Gehäuse (20) montiert ist, das flexible Bauelement (40) einen flexiblen Rohrteil (46) mit einem ersten Ende (41) umfasst, der an eine Öffnung (42) im Gehäuse (20) montiert ist und ein zweites, abgedichtetes Ende (43) umfasst, wobei das zweite abgedichtete Ende (43) eine Dichtung (50) enthält, die auf eine wasserdichte Art von einer Schweißelektrode (75) durchstochen ist.

2. Vorrichtung (10) nach Anspruch 1, **dadurch gekennzeichnet, dass** die Vorrichtung (10) weiter ein Heizmittel (100) umfasst, das angeordnet ist, dem Fluideinlass (32) des Gehäuses (20) erhitztes Gas bereitzustellen.

3. Vorrichtung (10) nach Anspruch 2, **dadurch gekennzeichnet, dass** das Heizmittel (100) einen Behälter (110) umfasst, der mindestens einen Gaseinlass (112), einen Gasauslass (114) und mindestens ein Heizelement (120) aufweist.

4. Vorrichtung (10) nach Anspruch 3, **dadurch gekennzeichnet, dass** das Heizelement (120) an einer inneren Oberfläche (111) des Behälters (110) montiert ist.

5. Vorrichtung (10) nach Anspruch 3, **dadurch gekennzeichnet, dass** das oder jedes Heizelement (120) im Wesentlichen orthogonal zur Richtung der Gasströmung in den Heizbehälter (110) angeordnet ist.

6. Vorrichtung (10) nach einem der Ansprüche 3 bis 5, **dadurch gekennzeichnet, dass** das oder jedes Heizelement (120) einen Innenraum des Behälters (110) auf bis zu und um 700°C herum erwärmt.

7. Vorrichtung (10) nach einem der Ansprüche 3 bis 6, **dadurch gekennzeichnet, dass** der Behälter (110) aus einem starren Material gebildet ist, das einem Wasserdruckpegel widerstehen kann, der in einer Tiefe auftritt, wo Unterwasserschweißen unternommen wird.

8. Vorrichtung (10) nach Anspruch 7, **dadurch gekennzeichnet, dass** das starre Material ein effizienter Wärmeleiter ist.

9. Vorrichtung (10) nach Anspruch 7 oder Anspruch 8, **dadurch gekennzeichnet, dass** der Behälter (110) aus einem metallischen Material gebildet ist, das aus einer Gruppe ausgewählt wurde, die Edelstahl, Kohlenstoffstahl, Aluminium, Titan, metallische Legierungen umfasst.

10. Vorrichtung (10) nach einem der Ansprüche 3 bis 9, **dadurch gekennzeichnet, dass** der Behälter (110) mit einer Isolierschicht (130) versehen ist, die aneinander liegend an einer Außenfläche (113) des Behälters (110) angeordnet ist.

11. Vorrichtung (10) nach Anspruch 10, **dadurch gekennzeichnet, dass** die Isolierschicht (130) aus einem synthetischen Kunststoffmaterial gebildet ist.

12. Vorrichtung (10) nach einem der Ansprüche 3 bis 11, **dadurch gekennzeichnet, dass** das oder jedes Heizelement (120) mit einem Rohr (122) für die Zufuhr von Energie zum oder zum jeweiligen Heizelement (120) von einer Energiequelle versehen ist.

13. Vorrichtung (10) nach einem der Ansprüche 3 bis 12, **dadurch gekennzeichnet, dass** der Gaseinlass (112) mit einem ersten Ventil (116) versehen ist, wobei das erste Ventil (116) eingerichtet ist an eine Schweißgasquelle gekoppelt zu werden, um Gas in den Behälter (110) zu erhalten.

14. Vorrichtung (10) nach einem der Ansprüche 3 bis 13, **dadurch gekennzeichnet, dass** der Gasauslass (114) mit einem zweiten Ventil (118) versehen ist, wobei das zweite Ventil (118) eingerichtet ist an einen Fluideinlass (32) des Gehäuses(20) gekoppelt zu werden, um erhitztes Gas zum Gehäuse (20) zu liefern.

15. Vorrichtung (10) nach einem der Ansprüche 3 bis 14, **dadurch gekennzeichnet, dass** das oder jedes Heizelement (120) eingerichtet ist, im Behälter (110) empfangenes Gas auf 100-300°C, während einer Verweilzeit des Gases im Behälter (110), zu erwärmen.

16. Vorrichtung (10) nach Anspruch 15, **dadurch gekennzeichnet, dass** das Gas, während der Verweilzeit im Behälter (110), auf 130-150°C erhitzt wird (110).

17. Vorrichtung (10) nach einem der Ansprüche 1 bis 16, **dadurch gekennzeichnet, dass** der Fluideinlass (32) und der Fluidauslass (34) in gegenüberliegenden Wänden (26) des Gehäuses (20) angeordnet sind.

18. Vorrichtung (10) nach einem der Ansprüche 1 bis 17, **dadurch gekennzeichnet, dass** sich ein Teil des Fluideinlasses (32) in das Gehäuse (20) erstreckt.

19. Vorrichtung (10) nach Anspruch 18, **dadurch gekennzeichnet, dass** der Teil perforiert, gegabelt oder verzweigt ist.

20. Vorrichtung (10) nach einem der Ansprüche 1 bis 19, **dadurch gekennzeichnet, dass** mehr als ein Fluideinlass (32) im Gehäuse (20) angeordnet ist.

21. Vorrichtung(10) nach einem der Anspräche 2 bis 20, **dadurch gekennzeichnet, dass** der Fluideinlass (32) eingerichtet ist, mit dem Heizmittel (100) gekoppelt zu werden und damit in Fluidkommunikation zu sein.

22. Vorrichtung (10) nach einem der Ansprüche 1 bis 21, **dadurch gekennzeichnet, dass** das Dichtmittel (30) von einer untersten Kante und entlang des ganzen Umfangs des Gehäuses (20) herabhängt.

23. Vorrichtung (10) nach einem der Ansprüche 1 bis 22, **dadurch gekennzeichnet, dass** das Dichtmittel (30) aus einem elastischen Kunststoffmaterial gebildet ist.

24. Vorrichtung (10) nach einem der Ansprüche 1- bis 23, **dadurch gekennzeichnet, dass** das Dichtmittel (30) aus einem Material gebildet ist, wobei die zwischen dem Gehäuse und dem Oberflächenbereich gebildete Dichtung wasserdicht ist.

25. Vorrichtung (10) nach einem der Ansprüche 1 bis 24, **dadurch gekennzeichnet, dass** die unterste Kante des Gehäuses (20) mit einer Kontur versehen ist, die im Wesentlichen einer äußeren Kontur des Oberflächenbereichs entspricht.

26. Vorrichtung (10) nach einem der Ansprüche 1 bis 25, **dadurch gekennzeichnet, dass** das Gehäuse (20) aus einem transparenten, starren Kunststoffmaterial gebildet ist

27. Vorrichtung (10) nach einem der Ansprüche 1 bis 26, **dadurch gekennzeichnet, dass** das Gehäuse aus Edelstahl mit Beobachtungsfenstern aus Polycarbonat gebildet ist.

28. Vorrichtung (10) nach einem der Ansprüche 1 bis 27, **dadurch gekennzeichnet, dass** das flexible Bauelement (40) aus einem flexiblen Rohrteil (46) besteht, das aneinander liegend an einer obersten Wand (23) des Gehäuses (20) montiert ist, wobei der Rohrteil (46) im Wesentlichen in Längsrichtung mit der Öffnung (42) in der obersten Wand (23) fluchtet.

## Revendications

1. Dispositif (10) d'isolation d'une surface en vue d'un soudage, comprenant un boîtier (20), comportant:
une entrée à fermeture étanche pour recevoir une électrode de soudage ;
une entrée de fluide (32) pour permettre le passage de gaz chauffé dans le boîtier, et une sortie de fluide (34) pour permettre le passage de gaz chauffé et/ou de liquide hors du boîtier, le boîtier étant agencé, en service, de manière à être fixé sur ladite surface ; et
un moyen d'étanchéité (30) agencé entre le boîtier (20) et la surface, pour établir un joint entre le boîtier (20) et la surface, l'entrée en service de gaz chauffé en service à travers l'entrée de fluide (32) dans le boîtier facilitant la sortie de gaz et/ou de liquide contenu dans un espace défini par le boîtier (20) et la surface traversant la sortie de fluide (34) dans le boîtier (20), établissant ainsi un environnement gazeux in situ pratiquement sec pour le soudage de la surface, **caractérisé en ce qu'**un élément flexible (40) est monté sur le boîtier (20), l'élément flexible (40) comprenant une partie de tube flexible (46), comportant une première extrémité (41) montée sur une ouverture (42) dans le boîtier (20), et une deuxième extrémité à fermeture étanche (43), la deuxième extrémité à fermeture étanche (43) contenant un joint (50) agencé de sorte à être percé par une électrode de soudage (75), de manière étanche à l'eau.

2. Dispositif (10) selon la revendication 1, **caractérisé en ce que** le dispositif (10) comprend en outre un moyen de chauffage (100) agencé de sorte à amener un gaz chauffé vers l'entrée de fluide (32) du boîtier (20).

3. Dispositif (10) selon la revendication 2, **caractérisé en ce que** le moyen de chauffage (100) comprend une cuve (110), comportant au moins une entrée de gaz (112), une sortie de gaz (114) et au moins un élément de chauffage (120).

4. Dispositif (10) selon la revendication 3, **caractérisé en ce que** l'élément de chauffage (120) est monté sur une surface interne (111) de la cuve (110).

5. Dispositif (10) selon la revendication 3, **caractérisé en ce que** l'élément de chauffage ou chaque élément de chauffage (120) est agencé de manière pratiquement orthogonale à la direction de l'écoulement du gaz dans la cuve de chauffage (110).

6. Dispositif selon l'une quelconque des revendications 3 à 5, **caractérisé en ce que** l'élément de chauffage ou chaque élément de chauffage (120) chauffe une partie interne de la cuve (110) à une température atteignant environ 700°C.

7. Dispositif (10) selon l'une quelconque des revendications 3 à 6, **caractérisé en ce que** la cuve (110) est formée à partir d'un matériau rigide capable de résister à un degré de pression d'eau existant au niveau d'une profondeur d'exécution d'un soudage sous l'eau.

8. Dispositif (10) selon la revendication 7, **caractérisé en ce que** le matériau rigide constitue un conducteur thermique efficace.

9. Dispositif (10) selon les revendications 7 ou 8, **caractérisé en ce que** la cuve (110) est formée à partir d'un matériau métallique sélectionné dans un groupe constitué d'acier inoxydable, d'acier au carbone, d'aluminium, de titane et d'alliages métalliques.

10. Dispositif (10) selon l'une quelconque des revendications 3 à 9, **caractérisé en ce que** la cuve (110) comporte une couche isolante (130) agencée de manière contiguë sur une surface externe (113) de la cuve (110).

11. Dispositif (10) selon la revendication 10, **caractérisé en ce que** la couche isolante (130) est formée à partir d'un matériau plastique synthétique.

12. Dispositif (10) selon l'une quelconque des revendications 3 à 11, **caractérisé en ce que** l'élément de chauffage ou chaque élément de chauffage (120) comporte un conduit (122) pour l'alimentation en énergie de l'élément de chauffage ou de chaque élément de chauffage (120) à partir d'une source d'énergie.

13. Dispositif (10) selon l'une quelconque des revendications 3 à 12, **caractérisé en ce que** l'entrée de gaz (112) comporte une première soupape (116), la première soupape (116) étant agencée de sorte à être accouplée à une source de gaz de soudage, pour recevoir le gaz dans la cuve (110).

14. Dispositif (10) selon l'une quelconque des revendications 3 à 13, **caractérisé en ce que** la sortie de gaz (114) comporte une deuxième soupape (118), la deuxième soupape (118) étant agencée de sorte à être accouplée à l'entrée de fluide (32) du boîtier (20), pour assurer l'alimentation en gaz chauffé au boîtier (20).

15. Dispositif (10) selon l'une quelconque des revendications 3 à 14, **caractérisé en ce que** l'élément de chauffage ou chaque élément de chauffage (120) est agencé de sorte à chauffer le gaz reçu dans la cuve (110) à une température comprise entre 100 et 300°C au cours d'une période de séjour du gaz dans la cuve (110).

16. Dispositif (10) selon la revendication 15, **caractérisé en ce que** le gaz est chauffé à une température comprise entre 130 et 150°C au cours de la période de séjour dans la cuve (110).

17. Dispositif (10) selon l'une quelconque des revendications 1 à 16, **caractérisé en ce que** l'entrée de fluide (32) et la sortie de fluide (34) sont agencées dans des parois opposées (26) du boîtier (20).

18. Dispositif (10) selon l'une quelconque des revendications 1 à 17, **caractérisé en ce qu'**une partie de l'entrée de fluide (32) s'étend dans le boîtier (20).

19. Dispositif (10) selon la revendication 18, **caractérisé en ce que** la partie est perforée, en fourche ou ramifiée.

20. Dispositif (10) selon l'une quelconque des revendications 1 à 19, **caractérisé en ce que** plus d'une entrée de fluide (32) est agencée dans le boîtier (20).

21. Dispositif (10) selon l'une quelconque des revendications 2 à 20, **caractérisé en ce que** l'entrée de fluide (32) est agencée de sorte à être accouplée au moyen de chauffage (100) et à être en communication de fluide avec celui-ci.

22. Dispositif (10) selon l'une quelconque des revendications 1 à 21, **caractérisé en ce que** le moyen d'étanchéité (30) s'étend vers le bas à partir et le long de l'ensemble de l'extension du bord inférieur extrême du boîtier (20).

23. Dispositif (10) selon l'une quelconque des revendications 1 à 22, **caractérisé en ce que** le moyen d'étanchéité (30) est formé à partir d'un matériau en plastique élastique.

24. Dispositif (10) selon l'une quelconque des revendications 1 à 23, **caractérisé en ce que** le moyen d'étanchéité (30) est formé à partir d'un matériau dans lequel le joint formé entre le boîtier et la surface est étanche à l'eau.

25. Dispositif (10) selon l'une quelconque des revendications 1 à 24, **caractérisé en ce que** le bord inférieur extrême du boîtier (20) comporte un contour correspondant pratiquement à un contour externe de la surface.

26. Dispositif (10) selon l'une quelconque des revendications 1 à 25, **caractérisé en ce que** le boîtier (20) est formé à partir d'un matériau plastique rigide transparent.

27. Dispositif (10) selon l'une quelconque des revendications 1 à 26, **caractérisé en ce que** le boîtier est formé à partir d'acier inoxydable et comporte des regards en polycarbonate.

28. Dispositif (10) selon l'une quelconque des revendications 1 à 27, **caractérisé en ce que** l'élément flexible (40) comprend une partie de tube flexible (46), montée de manière contiguë sur la paroi supérieure extrême (23) du boîtier (20), la partie de tube (46) étant pratiquement alignée de manière longitudinale avec l'ouverture (42) dans la paroi supérieure extrême (23).
